Europäisches Patentamt

European Patent Office

Office européen des brevets

(11) Publication number: **0 167 140**
**B1**

(12) **EUROPEAN PATENT SPECIFICATION**

(45) Date of publication of patent specification: **26.09.90**

(21) Application number: **85108147.1**

(22) Date of filing: **01.07.85**

(51) Int. Cl.⁵: **G 06 F 13/24**

(54) Interruption control circuit.

(30) Priority: **05.07.84 JP 139618/84**

(43) Date of publication of application:
**08.01.86 Bulletin 86/02**

(45) Publication of the grant of the patent:
**26.09.90 Bulletin 90/39**

(84) Designated Contracting States:
**DE GB IT**

(56) References cited:
**FR-A-2 413 717**

**PROCEEDINGS OF THE FALL JOINT COMPUTER CONFERENCE, 17th-19th November 1970, Houston, Texas, pages 621-627, AFIPS Press, Montuale, New York, US; J.D. ERWIN et al.: "Interrupt processing with queued content-addressable memories"**

**EUROMICRO NEWSLETTER, vol. 2, no. 1, January 1976, pages 23-29, European Association for Micro-processing and Microprogramming, Compiegne, FR; V.**

(73) Proprietor: **NEC CORPORATION**
**7-1, Shiba 5-chome Minato-ku**
**Tokyo 108-01 (JP)**

(72) Inventor: **Takayama, Sjigeru**
**c/o NEC Corporation 33-1, Shiba 5-chome**
**Minato-ku Tokyo (JP)**

(74) Representative: **Glawe, Delfs, Moll & Partner**
**Patentanwälte**
**Postfach 26 01 62 Liebherrstrasse 20**
**D-8000 München 26 (DE)**

**CASTELLANI et al.: "Communication interface for high-speed synchronous telephone line connection of a master computer with several interactive video terminals"**

Courier Press, Leamington Spa, England.

## Description

### Background of the Invention

The present invention relates to an interruption control circuit, and more particularly to an interruption control circuit operative to produce interruption vector information from interruption vector generators configured as a memory matrix array in response to interruption requests. Specifically, the present invention is concerned with an interruption control circuit wherein each interruption vector generator has a self-addressing function to provide an access to the self-addressed interruption vector generator to thereby output interruption vector information via a single output buffer.

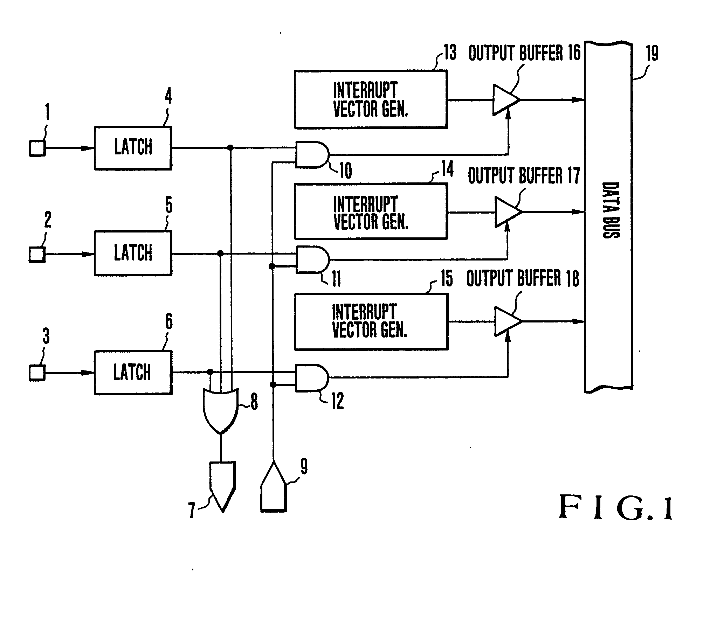

First, a conventional interruption control circuit will be described with reference to Fig. 1. This circuit comprises input terminals 1, 2 and 3 receiving interruption request signals, latch circuits 4, 5 and 6 connected to the input terminals 1, 2 and 3, respectively, an output terminal 7 for transmitting interruption request signal to a CPU (not shown), which is connected to respective outputs of the latch circuits 4, 5 and 6 through an OR gate 8, and an input terminal 9 for receiving an interruption acknowledge signal from the CPU. The interruption control circuit further comprises AND gates 10, 11 and 12 for performing logical product of outputs from the latch circuits 4, 5 and 6 and the interruption acknowledge signal from the input terminal 9, respectively, interruption vector generators 13, 14 and 15 each having plural bit configuration, output buffers 16, 17 and 18 each having plural bit configuration to output respective output signals from the interruption vector generators 13, 14 and 15 depending upon the output states of the AND gates 10, 11 and 12, and a data bus 19 coupled in parallel with the output buffers 16, 17 and 18.

For instance, when an interruption request signal is inputted to the input terminal 1, the latch circuit 4 becomes operative to latch the interruption request signal. The output signal of the latch circuit 4 is fed to one input terminal of the AND gate 10 and is also fed to the output terminal 7 through the OR gate 8 as an interruption request signal to the CPU. When the CPU accept this interruption signal, it outputs an interruption acknowledge signal to the input terminal 9. As a result, the output buffer 16 is enabled by the interruption acknowledge signal. Thus, an output signal (interruption vector information) from the interruption vector generator 13 is outputted to the data bus 19 via the output buffer 16. Further, in the case where an interruption request signal is fed to the input terminal 2 or 3, a similar interruption operation is carried out. Namely, interruption vector information from the interruption vector generator 14 or 15 is outputted to the data bus 19 via the output buffer 17 or 18.

In the above-mentioned conventional circuit for controlling a plurality of interruptions, output buffers having plural bit configuration are provided by the same number as that of received interruptions and they are connected to the data bus 19. Accordingly, large capacity due to a large number of output buffers is added to the data bus, with the result that signal transmission speed is lowered.

Further, from a mask layout point of view, it is not preferable that a large number of output buffers having large area are arranged.

### Summary of the Invention

With the above in view, an object of the present invention is to provide an interruption control circuit which has eliminated above-mentioned drawbacks.

Another object of the present invention is to provide a small-sized interruption control circuit having high signal transmission speed.

This object is achieved by an interruption control circuit having the features given in claim 1; the dependent claims are related to further developments of the invention.

### Brief Description of the Drawings

The features and advantages of an interruption control circuit according to the present invention will become more apparent from the following description taken in conjunction with the accompanying drawings, in which:

Fig. 1 is a block diagram schematically illustrating a conventional interruption control circuit,

Fig. 2 is a block diagram illustrating an embodiment of an interruption control circuit according to the present invention, and

Figs. 3 to 5 are circuit diagrams illustrating memory cells employed in the interruption control circuit shown in Fig. 2, respectively.

### Detailed Description of the Preferred Embodiment

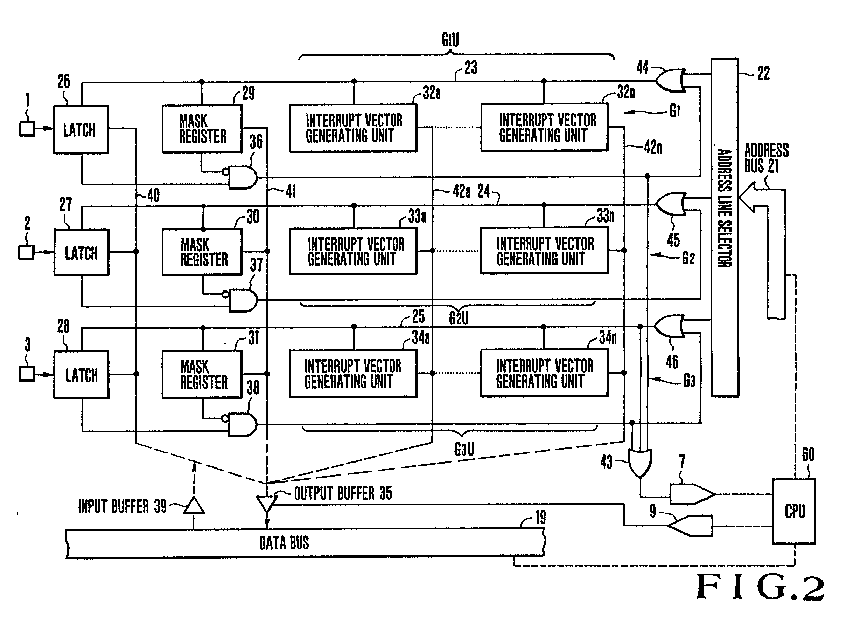

Fig. 2 shows a block diagram illustrating an embodiment of an interruption control circuit wherein parts identical to those in Fig. 1 are designated by the same reference numerals, respectively, and therefore their explanation will be omitted.

The interruption control circuit in this embodiment is configured as a memory circuit to output interruption vector information in response to multilevel interruption request for a CPU 60. The interruption control circuit comprises a plurality of interruption vector generators $G_1$, $G_2$ and $G_3$ configured as each row of a memory matrix array. Each interruption vector generator has a function to effect self-addressing based on the contents of a memory cell functioning as a latch circuit for latching an interruption request and the contents of a memory cell functioning as a mask register in which interruption control information is stored. Each interruption reactor generator ($G_1$—$G_3$) further comprises a single output buffer 35 commonly coupled to memory cells constituting each interruption vector generator, thereby providing an access to a self-addressed interruption vector generator to concurrently output the interruption vector information from the respective memory cells to a data bus via the single output buffer 35.

Since each row of the memory matrix array has the same arrangement, configuration of the first row will be described as an example. The first row constituting the interruption vector generator $G_1$ comprises a memory cell functioning as a latch circuit 26, a memory cell functioning as a mask register 29, and memory cells 32a and 32n constituting an interruption vector generating unit $G_1U$. Each row further comprises an interruption control gate 36 having one input terminal connected to the output of the latch circuit 26 and the other input terminal connected to the output of the mask register 29 to detect whether addressing is requested based on these outputs, thereby effecting self-addressing of the interruption generator $G_1$.

The interruption control circuit further comprises an address line selector 22. An address bus 21 is coupled on the input side thereof and a plurality of address lines 23, 24 and 25 are coupled on the output side thereof. The address line 23 is coupled to the row $G_1$ through an OR gate 44. The interruption control gate 36 has an output connected to one input of the OR gate 44.

Likewise, the address line 24 is coupled to respective memory cells 27, 30 and 33a to 33n in the second row $G_2$ through an OR gate 45. An interruption control gate 37 has an output connected to the input of the OR gate 45. Further, the address line 25 is coupled to respective memory cells 28, 31 and 34a to 34n in the third row $G_3$ through an OR gate 46. An interruption control gate 38 has an output connected to one input of the OR gate 46.

The interruption control circuit further comprises an input buffer 39 for writing fundamental information of interruption vector information into memory cells constituting the interruption generating units ($G_1U$—$G_3U$) and interruption control information into the memory cell functioning as the mask register 29, respectively. The above-mentioned single output buffer 35 is commonly connected in parallel with memory cells located on the columns of the memory matrix array via output lines 40, 41, and 42a to 42n, respectively. The CPU 60 is coupled through dotted lines to the output terminal 7, input terminal 9, data bus 19 and address bus 21.

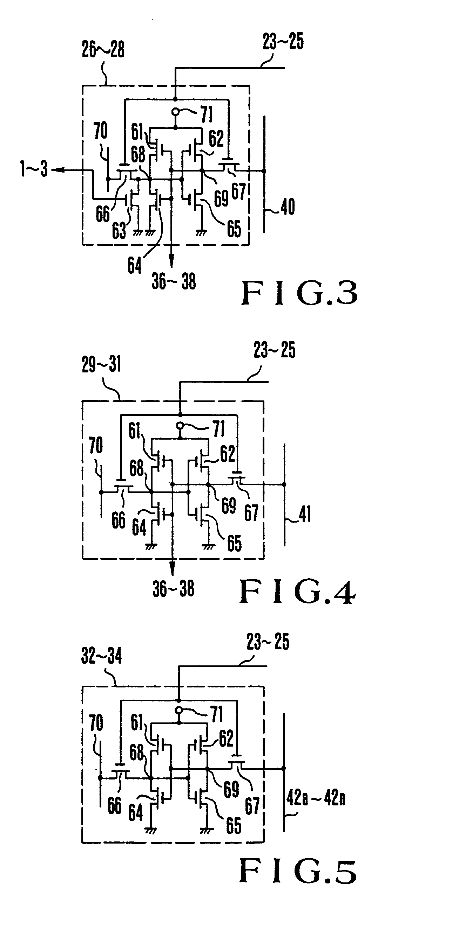

In addition, the memory cells 26 to 28 each functioning as latch circuit may be configured as a known memory circuit of FET structure as shown in Fig. 3. Likewise, the memory cells 29 to 31 each functioning as mask register may be configured as a known memory circuit of FET structure as shown in Fig. 4. Further, the memory cells 32a to 32n, 33a to 33n and 34a to 34n may be configured as a known memory circuit of FET structure as shown in Fig. 5. To describe these circuits briefly, in Fig. 3, reference numerals 61 through 65 denote transistors constituting a latch unit of the memory cell, and 66 and 67 denote transistors for writing information into and reading information out of the memory cell. The reference numerals 68 and 69 denote output terminals of the latch unit.

For writing data "1" into the memory cell, as the signal on the data line 40 is rendered "1" and the signal on the data line 70 is rendered "0" while the signal on the lines 23 to 25 is "1", the signal at 68 becomes "0" and the signal at 69 becomes "1". Thus, even when the signal on the lines 23 to 25 becomes "0", the terminal 68 maintains "0" and the terminal 69 maintains "1" and the data "1" is written into the memory cell.

For reading data out of the memory cell then, when the signal on the lines 23 to 25 is rendered "1", the values at terminals 68 and 69 are produced to the data lines 40 and 70.

To add, even when the signal on the lines 23 to 25 is "0", as the signal on the terminal 1, 2 or 3 is rendered "1", the signal at 68 becomes "0" and the signal at 69 becomes "1". Consequently, even when the signal on the terminal 1, 2 or 3 becomes "0", the values at 68 and 69 are maintained and the data "1" is written into the memory cell.

To the lines 36 to 38, the value at the terminal 69 is always produced. Applied to a terminal 71 is a power supply voltage. In Figs. 4 and 5, like elements are designated by like reference numerals. It should be understood that a circuit shown in Fig. 4 is the same as the Fig. 3 circuit with the only exception of removal of the transistor 63 along with a line extending therefrom to the terminal 1, 2 or 3, and that a circuit shown in Fig. 5 is the same as the Fig. 4 circuit with the only exception of removal of the lines 36 to 38.

The operation of the above-mentioned interruption control circuit will be described.

When an interruption request signal arrives at the input terminal 1, the latch circuit 26 is set to produce an output of logic "1" to the interruption control gate 36. When the contents of the mask register 29 is logic "0", the interruption control gate 36 produces an output of logic "1". Thus, the address line 23 is selected. The contents of the memory cells 26, 29 and 32a to 32n are concurrently inputted to the output buffer 35. In this instance, since the output of the interruption control gate 36 is logic "1", the interruption request signal to the CPU is outputted from the output terminal 7. When the CPU accepts this interruption, the interruption acknowledge signal is inputted to the input terminal 9. Thus, the output buffer 35 is enabled to output the contents of the memory cells 26, 29 and 32a to 32n to the data bus 19 as the vector information.

However, even if the latch circuit is set by the interruption request, when the contents of the mask register 29 is logic "1", the interruption operation is not effected since the interruption control gate 36 produces an output of logic "0".

A similar interruption control is effected in connection with the interruption requests due to the interruption request signals arriving at the input terminals 2 and 3.

Then, write operation of interruption vector information into the memory cells constituting each interruption generator will be described.

When a certain address line is designated by an address transmitted via the address bus 21, the address line selector circuit 22 becomes operative to select the designated address line. Such a write operation of interruption vector information and input information for the interruption control gate is effected with respect to corresponding memory cells connected to the selected address line.

Thus, the interruption control circuit of the embodiment only requires a single buffer having plural bit configuration connected to the data bus even when contemplating execution of a control of a plurality of interruptions. Accordingly, this results in low capacity added to the data bus and high signal transmission speed. Further, the occupation area for the output buffer can be reduced.

As stated above, the interruption control circuit according to the present invention makes it possible to process plural vector interruptions by means of a single output buffer having plural bit configuration. Accordingly, this enables the capacity added to the data bus to be small and accomplishes high speed signal transmission and small-sized circuit. Further, since interruption vector information can be arbitrarily written into the memory cell, it is possible to effect an expanded interruption control by setting a plurality of vectors with respect to one interruption.

**Claims**

1. An interruption control circuit for controlling the output of at least one interruption vector generator means comprising.
   a) A plurality of said interruption vector generator means (G1, G2, G3) each having
   a1) an input terminal (1) for receiving an interruption request signal,
   a2) a plurality of memory cells (26, 29, 32a—n) including a latch circuit (26) connected to said input terminal (1) for latching the interruption request signal and an interruption vector generator unit (G1U) for storing an interruption vector information, and
   a3) output buffer means (35) connected to said interruption generator unit (G1U);
   b) an output terminal (7) for transmitting each interruption request signal to a CPU (60), an input terminal (9) for receiving an interruption acknowledge signal from said CPU and transmitting said signal to said output buffer means (35), thereby enabling said output buffer means to output said interruption vector information to a data bus (19) upon receiving said interruption acknowledge signal, characterized in
   c) that a plurality of interruption vector generator means enabling means (23, 44, 36; 24, 45, 37; 25, 46, 38) is provided, each having a function to effect a self-addressing of said interruption vector generator means (G1, G2, G3) on the basis of a corresponding one of said interruption request signals and corresponding interruption control information, and
   d) that said output buffer means is a single output buffer (35) commonly coupled to each of said interruption vector generator means (G1, G2, G3), thereby to provide an access to a self addressed interruption vector generator means (G1, G2, G3), to concurrently output the corresponding interruption vector information via said output buffer means (35) when said processor means (60) produces said interruption acknowledge signal.

2. An interruption control circuit as set forth in claim 1, wherein said corresponding interruption request signal is outputted concurrently with said corresponding interruption vector information.

3. An interruption control circuit as set forth in claim 1, wherein each of said interruption vector generator means (G1, G2, G3) comprises a first memory area comprising a first memory cell (26, 27, 28) representing said latch circuit, and a second memory cell (29, 30, 31) for holding said interruption control information, and a second memory area representing said interruption vector generator unit (G1U...) and comprising a plurality of memory cells (32a—n, 33a—n, 34a—n) for holding said interruption vector information.

4. An interruption control circuit as set forth in claim 3, wherein said second memory cell (29, 30, 31) functions as a mask register.

5. An interruption control circuit as set forth in claim 4, which further comprises address line selector means (22), an address bus (21) being coupled on the input side of said selector means (22), a plurality of address lines (23, 24, 25) representing said interruption vector generator means enabling means and being coupled on the output side of said selector means (22), each of said address lines (23, 24, 25) being coupled to said first (26, 29; 27, 30; 28, 31) and second (32a—n; 33a—n, 34a—n) memory areas in each of said interruption vector generator means (G1, G2, G3).

6. An interruption control circuit as set forth in claim 5, which further comprises input buffer means (39) coupled to said data bus (19) and for writing said interruption vector information and said interruption control information into said second and first memory areas, respectively, via activating an address line (23, 24, 25) selected by said address selector means (22).

7. An interruption control circuit as set forth in any of claims 1 to 6, wherein
   a) said interruption vector generator means (G1, G2, G3) is defined by respective rows of a matrix array being a (m × n) matrix array where m is a positive integer equal to the number of said plurality of interruption request signals and n is a positive integer more than three, and wherein,
   b) said memory cells are arranged on respective cross points of said matrix array, and wherein
   c) each of said interruption vector generator means (G1, G2, G3) further comprises interruption control means (36, 37, 38) responsive to the output of said first memory cell (26, 27, 28) and the contents of said second memory cell (29, 30, 31) to detect whether its addressing is requested or not, and wherein

d) said output buffer (35) is commonly coupled in parallel with said memory cells located on the respective columns of said matrix array, thereby to provide an access to the respective memory cells of self addressed interruption vector generator means (G1, G2, G3) to concurrently output said interruption vector information and said interruption control information therefrom via said output buffer (35) at a time when a said processor means (60) produces an interruption acknowledge signal.

8. An interruption control circuit as set forth in claim 7, wherein each output line (40, 41, 42a—n) of said interruption control means (36, 37, 38) and each of said address lines (23, 24, 25) are connected to said respective memory cells (26, 29, 32a—n; 27, 30, 33a—n; 28, 31, 34a—n) constituting each of said interruption vector generator means (G1, G2, G3).

## Patentansprüche

1. Unterbrechungssteuerschaltung zum Steuern der Ausgabe von zumindest einer Unterbrechungs-Vektorerzeugereinrichtung mit:

a) einer Vielzahl von den Unterbrechungs-Vektorerzeugereinrichtungen (G1, G2, G3) mit je

a1) einem Eingangsanschluß (1) zum Empfangen eines Unterbrechungsanfragesignals,

a2) einer Vielzahl von Speicherzellen (26, 29, 32a—n) mit einer Sperrschaltung (26), die mit dem Eingangsanschluß (1) verbunden ist, um das Unterbrechungsanfragesignal abzusperren und mit einer Unterbrechungs-Vektorerzeugereinheit (G1U) zum Speichern einer Unterbrechungs-Vektorinformation, und

a3) einem Ausgangspufferglied (35), das mit der Unterbrechungs-Erzeugereinheit (G1U) verbunden ist;

b) einem Ausgangsanschluß (7) zum Übertragen jedes Unterbrechungs-Anfragesignals an eine CPU (60), einen Eingangsanschluß (9) zum Empfangen eines UnterbrechungsBestätigungssignals von der CPU und zum Übertragen dieses Signals an das Ausgangspufferglied (35), wobei das Ausgangspufferglied bei Empfang des Unterbrechungs-Bestätigungssignals freigegeben wird, die Unterbrechungs-Vektorinformation an einen Datenbus (19) auszugeben, dadurch gekennzeichnet,

c) daß eine Vielzahl von Freigabeeinrichtungen (23, 44, 36; 24, 45, 37; 25, 46, 38) für die UnterbrechungsVektorerzeugungseinrichtung vorgesehen sind, die jeweils die Funktion haben, eine Selbstadressierung der Unterbrechungs-Vektorerzeugungseinrichtung (G1, G2, G3) auf der Grundlage eines entsprechenden Unterbrechungs-Anforderungssignals und einer entsprechenden Unterbrechungssteuerunginformation zu bewirken, und

d) daß das Ausgabepufferglied ein einzelner Ausgabepuffer (35) ist, der mit jedem der Unterbrechungs-Vektroerzeugereinrichtungen (G1, G2, G3) gemeinsam gekoppelt ist, um dadurch einen Zugriff auf eine selbstadressierte Unterbrechungs-Vektorerzeugereinrichtung (G1, G2, G3) zu schaffen, um die entsprechende Unterbrechungs-Vektorinformation über das Ausgabepufferglied (35) gleichzeitig auszugeben, wenn die Prozessoreinrichtung (60) das Unterbrechungs-Bestätigungssignal erzeugt.

2. Unterbrechungssteuerschaltung nach Anspruch 1, in der das entsprechende Unterbrechungs-Anforderungssignal gleichzeitig mit der entsprechenden Unterbrechungs-Vektorinformation ausgegeben wird.

3. Unterbrechungssteuerschaltung nach Anspruch 1, in der jede der Unterbrechungs-Vektorerzeugereinrichtungen (G1, G2, G3) einen ersten Speicherbereich mit einer die Sperrschaltung darstellenden ersten Speicherzelle (26, 27, 28) und einer zweiten Speicherzelle (29, 30, 31) zum Halten der Unterbrechungs-Steuerinformation, und einen zweiten Speicherbereich, der die Unterbrechungs-Vektorerzeugereinheit (G1U...) darstellt und eine Vielzahl von Speicherzellen (32a—n, 33a—n, 34a—n) zum Halten der UnterbrechungsVektorinformation umfaßt, aufweist.

4. Unterbrechungssteuerschaltung nach Anspruch 3, in der die zweite Speicherzelle (29, 30, 31) als Maskenregister arbeitet.

5. Unterbrechungssteuerschaltung nach Anspruch 4, die ferner aufweist eine Adressleitungsauswahleinrichtung (22), einen Adressbus (21), der an die Eingangsseite der Auswahleinrichtung (22) gekoppelt ist, eine Vielzahl von Adressleitungen (23, 24, 25), die die Freigabeeinrichtungen für die Unterbrechungs-Vektorerzeugereinrichtungen darstellen und an die Ausgangsseite der Auswahleinrichtung (22) gekoppelt sind, wobei jede der Adressleitungen (23, 24, 25) an den ersten (26, 29; 27, 30; 28, 31) und zweiten (32a—n; 33a—n, 34a—n) Speicherbereich in jeder der UnterbrechungsVektorerzeugereinrichtungen (G1, G2, G3) gekoppelt ist.

6. Unterbrechungssteuerschaltung nach Anspruch 5, die ferner aufweist, ein Eingangspufferglied (39), das an den Datenbus (19) gekoppelt ist und zum Schreiben der Unterbrechungs-Vektorinformation und der Unterbrechungs-Steuerinformation jeweils in den zweiten und ersten Speicherbereich, über das Aktivieren einer durch die Adressauswahleinrichtung (22) ausgewählten Adressleitung (23, 24 25).

7. Unterbrechungssteuerschaltung nach einem der Ansprüche 1 bis 6, in der

a) die Unterbrechungs-Vektorerzeugereinrichtung (G1, G2, G3) durch jeweilige Zeilen einer Matrixanordnung bestimmt ist, die eine (m × n) Matrixanordnung ist, wobei m eine positive ganze Zahl ist, gleich der Anzahl der Vielzahl von Unterbrechungs-Anforderungsignalen, und n eine positive ganze Zahl größer als 3 ist, und in der,

b) die Speicherzellen auf jeweiligen Kreuzungspunkten der Matrixanordnung angeordnet sind, und in der

c) jede der Unterbrechungs-Vektorerzeugungseinrichtungen G1, G2, G3) ferner aufweist, Unterbrechungs-Steuerglieder (36, 37, 38), die abhängig sind von der Ausgabe der ersten Speicherzelle (26, 27, 28) und den Inhalten der zweiten Speicherzelle (29, 30, 31), um zu detektieren, ob deren Adressierung angefordert wird oder nicht, und in der

d) der Ausgabepuffer (35) parallel mit den Speicherzellen gemeinsam verbunden ist, die auf den jeweiligen Spalten der Matrixanordnung angeordnet sind, um dadurch einen Zugriff auf die jeweiligen Speicherzellen selbstadressierter Unterbrechungs-Vektorerzeugereinrichtungen (G1, G2, G3) zu schaffen, um die Unterbrechungs-Vektorinformation und die Unterbrechungs-Steuerfunktion gleichzeitig über den Ausgabepuffer (35) daraus auszugeben, zu einer Zeit, wenn eine besagte Prozessoreinrichtung (60) ein Unterbrechungs-Bestätigungssignal erzeugt.

8. Unterbrechungssteuerschaltung nach Anspruch 7, in der jede Ausgangsleitung (40, 41, 42a—n) der Unterbrechungs-Steuereinrichtung (36, 37, 38) und jede der Adressleitungen (23, 24, 25) mit den jeweiligen Speicherzellen (26, 29, 32a—n; 27, 30, 33a—n; 28, 31, 34a—n), die jede der Unterbrechungs-Vektorerzeugungseinrichtungen (G1, G2, G3) bilden, verbunden sind.

## Revendications

1. Circuit de commande d'interruptions pour commander la sortie d'au moins un moyen à générateur vectoriel d'interruptions, comportant:

a) une pluralité desdits moyens à générateurs vectoriels d'interruptions (G1, G2, G3) présentant chacun

a1 — une borne d'entrée (1) pour recevoir un signal de demande d'interruption,

a2 — une pluralité de cellules de mémoire (26, 29, 32a—n) comprenant un circuit à verrouillage (26) raccordé à ladite borne d'entrée (1) pour commander le signal de demande d'interruption et une unité à générateur vectoriel d'interruptions (G1U) pour mémoriser une information vectorielle d'interruption, et

a3 — des moyens tampon de sortie (35) raccordés à ladite unité à générateur vectoriel d'interruptions (G1U);

b) une bornde de sortie (7) pour transmettre chaque signal de demande d'interruption à une unité centrale (60), une borne d'entrée (9) pour recevoir un signal de confirmation d'interruption de l'unité centrale et transmettre ledit signal auxdits moyens tampon de sortie (35), ce qui permet auxdits moyens tampon de sortie d'envoyer ladite information vectorielle d'interruption à un bus de données (19) lorsqu'ils reçoivent ledit signal de confirmation d'interruption, caractérisé en ce

c) qu'il est prévu une pluralité de moyens de déclenchement (23, 44, 36; 24, 45, 37; 25, 46, 38) des moyens à générateurs vectoriels d'interruptions, chacun d'eux ayant la fonction d'effectuer un auto-adressage desdits moyens à générateurs vectoriels d'interruptions (G1, G2, G3) sur la base de l'un, correspondant, desdits signaux de demande d'interruption et de l'information de commande d'interruption correspondante et

d) que lesdits moyens tampon de sortie sont constitués d'un élément tampon de sortie unique (35) relié en commun à chacun desdits moyens à générateurs vectoriels d'interruptions (G1, G2, G3), pour donner ainsi accès à un moyen auto-adressé à générateur vectoriels d'interruptions (G1, G2, G3), et fournir concurremment l'information vectorielle d'interruption par l'intermédiaire dudit élément tampon de sortie (35) quand lesdits moyens processeurs (60) produisent ledit signal de confirmation d'interruption.

2. Circuit de commande d'interruptions selon la revendication 1, dans lequel ledit signal de demande d'interruption correspondant est émis concurremment à ladite information vectorielle d'interruption correspondante.

3. Circuit de commande d'interruptions selon la revendication 1, dans lequel chacun desdits moyens à générateurs vectoriels d'interruptions (G1, G2, G3) présente une première zone de mémoire comportant une première cellule de mémoire (26, 27, 28) qui forme ledit circuit à verrouillage et une deuxième cellule de mémoire (29, 30, 31) pour retenir ladite information de commande d'interruption, ainsi qu'une deuxième zone de mémoire qui forme ladite unité à générateur vectoriel d'interruptions (G1U ...) et qui comporte une pluralité de cellules de mémoire (32a—n, 33a—n, 34a—n) pour retenir ladite information vectorielle d'interruption.

4. Circuit de commande d'interruptions selon la revendication 3, dans lequel ladite deuxième cellule de mémoire (29, 30, 31) fonctionne comme un registre à masque.

5. Circuit de commande d'interruptions selon la revendication 4, comportant en outre des moyens sélecteurs de ligne d'adressage (22), un bus d'adressage (21) étant branché du côté d'entrée desdits moyens sélecteurs (22), un pluralité de lignes d'adressage (23, 24, 25) constituant lesdits moyens de déclenchement des moyens à générateurs vectoriels d'interruptions et qui sont branchés du côté de sortie desdits moyens sélecteurs (22), chacune desdites lignes d'adressage (23, 24, 25) étant reliée auxdites première (26, 29; 27, 30; 28, 31) et deuxièmes (32a—n, 33a—n; 34a—n) zones de mémoire de chacun desdits moyens à générateurs vectoriels d'interruptions (G1, G2, G3).

6. Circuit de commande d'interruptions selon la revendication 5, comportant en outre des moyens tampon d'entrée (39) reliés audit bus de données (19) et destinés à l'inscription de ladite information vectorielle d'interruption et de ladite information de commande d'interruption respectivement dans ladite deuxième et dans ladite première zones de mémoire, par l'intermédiaire d'une ligne d'adressage (23, 24, 25) sélectionnée par lesdits moyens sélecteurs de ligne d'adressage (22).

7. Circuit de commande d'interruptions selon l'une quelconque des revendications 1 à 6, dans lequel

a) lesdits moyens à générateurs vectoriels d'interruptions (G1, G2, G3) sont définis par des rangées respectives d'une matrice constituée d'un arrangement matriciel (m × n) où m est un entier positif égal au nombre des signaux de ladite pluralité de signaux de demande d'interruption et n est un entier positif supérieur à trois, et dans lequel

b) lesdites cellules de mémoire sont disposées en des points de croisement respectifs dudit arrangement matriciel, et dans lequel

c) chacun desdits moyens à générateurs vectoriels d'interruptions (G1, G2, G3) comporte en outre des moyens de commande d'interruptions (36, 37, 38) sensibles au signal de sortie de ladite première cellule de mémoire (26, 27, 28) et au contenu de ladite deuxième cellule de mémoire (29, 30, 31) pour détecter si son adressage est oui ou non nécessaire, et dans lequel

d) ledit élément tampon de sortie (35) est normalement branché en parallèle avec lesdites cellules de mémoire situées dans les colonnes respectives dudit arrangement matriciel, pour donner ainsi un accès aux cellules de mémoire respectives des moyens à générateurs vectoriels d'interruption auto-adressés (G1, G2, G3) et en obtenir concurremment ladite information vectorielle d'interruption et ladite information de commande d'interruption par l'intermédiaire dudit élément tampon de sortie (35) à l'instant où lesdits moyens processeurs (60) produisent un signal de confirmation d'interruption.

8. Circuit de commande d'interruptions selon la revendication 7, dans lequel chaque ligne de sorite (40, 41, 42a—n) desdits moyens de commande d'interruptions (36, 37, 38) et chacune desdites lignes d'adressage (23, 24, 25) sont raccordées auxdites cellules de mémoire respectives (26, 29, 32a—n; 27, 30, 33a—n; 28, 31, 34a—n) constituant chacun desdits moyens à générateurs vectoriels d'interruptions (G1, G2, G3).

F I G.1

FIG.2

ADDRESS BUS 21

ADDRESS LINE SELECTOR

22

G1

G2

45

G3

46

44

42n

32n

INTERRUPT VECTOR GENERATING UNIT

33n

INTERRUPT VECTOR GENERATING UNIT

34n

INTERRUPT VECTOR GENERATING UNIT

G1U

23

32a

INTERRUPT VECTOR GENERATING UNIT

42a 24

33a

INTERRUPT VECTOR GENERATING UNIT

G2U

25

34a

INTERRUPT VECTOR GENERATING UNIT

G3U

43

7

9

60

CPU

19

OUTPUT BUFFER 35

DATA BUS

41

29

36

MASK REGISTER

30

37

MASK REGISTER

31

38

MASK REGISTER

40

INPUT BUFFER 39

26

LATCH

1

27

LATCH

2

28

LATCH

3

FIG.3

FIG.4

FIG.5